# DEMANDE DE BREVET EUROPEEN

(11) **EP 4 707 969 A1**
(43) Date de publication de la demande: **11.03.2026**
(21) Numéro de dépôt: 25199284.8
(22) Date de dépôt: 01.09.2025
(51) Int. Cl.: G05B 19/05, G05B 19/418

(54) **PROCÉDÉ DE SURVEILLANCE DE SYSTÈMES INSTRUMENTÉS CONNECTÉS À UNE BOUCLE DE COURANT**

(30) Priorité: 03.09.2024 FR 2409354
(71) Demandeur: Electricité de France, 75008 Paris (FR)
(72) Inventeur: MERIEUX, Christophe, 77210 AVON (FR); DANG, Tien Tuan, 77184 EMERAINVILLE (FR)
(74) Mandataire: Regimbeau

(57) **Abrégé**

Procédé comprenant : analyser au moins un système instrumenté (102), l'analyse d'un système instrumenté comprenant : causer une transmission (200) au système instrumenté d'une commande selon le protocole HART via une boucle de courant à laquelle le système instrumenté est connecté, recevoir (202) une trame selon le protocole HART transmise par l'équipement instrumenté en réponse à la commande, via la boucle de courant, extraire (204) de la trame une information indiquant si l'équipement instrumenté est protégé en écriture ; générer (104) un message récapitulatif au moins en partie en langage naturel à partir de chaque information extraite, le message récapitulatif indiquant s'il existe ou non des équipements instrumentés analysés qui ne sont pas protégés en écriture ; et causer une restitution (106) du message récapitulatif à un utilisateur par un périphérique de sortie.

## Description

### DOMAINE DE L'INVENTION

La présente invention concerne un procédé de surveillance de systèmes instrumentés connectés à une boucle de courant.

### ETAT DE LA TECHNIQUE

Le protocole HART (Highway Addressable Remote Transducer) a été développé au milieu des années 1980 pour permettre la communication bidirectionnelle d'informations de diagnostic et de configuration - en plus des variables de process normales - entre appareils de terrain intelligents et également avec un système de gestion/suivi des équipements à distance.

En effet, il permet à la fois la configuration des équipements connectés mais aussi la remontée de données de fonctionnement fournies par les capteurs intégrés à ces équipements de terrain.

Un très grand nombre (40 millions environ selon la fondation Fieldbuses) de capteurs, positionneurs, régulateurs utilisent le protocole HART pour sa simplicité et sa robustesse notamment pour des équipements situés sur de très grandes distances, du fait de l'emploi d'une boucle de courant 4/20mA.

La boucle de courant est fiable et hautement immunisée contre les interférences environnementales sur longues distances de communication. Il n'est pas étonnant, donc, qu'elle soit encore largement utilisée à ce jour dans l'industrie.

L'avantage de la technologie HART, relativement ancienne, est de ne pas être un bus de terrain totalement numérique, cela confère une sécurité de communication pour les informations analogiques qui circulent sur la boucle 4/20mA (réponse d'un capteur, signal de commande, ...) et difficilement « piratable » car la boucle de courant est une liaison analogique en « point-à-point » entre les instrumentations et un automate de contrôle commande.

La configuration des capteurs via le protocole HART, est réalisé à l'aide de questions/réponses entre un dispositif maître (ordinateur, tablette) et un esclave (équipement instrumentées) via des « commandes » (CMD) qui sont formatées pour respecter la structure de la communication HART.

Cela en fait donc un protocole relativement sûr si la protection (physique/logique) en écriture est active sur les équipements instrumentés. Les protections en écritures sont soit activables via des interrupteurs ou de façon logicielle (activation d'une commande spécifique).

Il existe certains logiciels, notamment le logiciel FrameAlyst faisant partie de la liste HART Tools commercialisée par la société Borst Automation, pouvant être utilisés pour afficher sur un écran le contenu « brut » des trames de réponse fournies par des équipements instrumentés. Un inconvénient de ces logiciels est qu'un utilisateur néophyte ne connaissant pas le protocole HART n'est pas capable d'interpréter le contenu brut qui lui est présenté.

### EXPOSE DE L'INVENTION

Un but de l'invention est de permettre à un utilisateur néophyte en matière de protocole HART d'identifier facilement l'existence de systèmes instrumentés non-protégés en écriture dans des boucles de courant.

Il est à cet effet proposé un procédé comprenant : analyser au moins un système instrumenté, l'analyse d'un système instrumenté comprenant : causer une transmission au système instrumenté d'une commande selon le protocole HART via une boucle de courant à laquelle le système instrumenté est connecté, recevoir une trame selon le protocole HART transmise par l'équipement instrumenté en réponse à la commande, via la boucle de courant, extraire de la trame une information indiquant si l'équipement instrumenté est protégé en écriture ; générer un message récapitulatif au moins en partie en langage naturel à partir de chaque information extraite, le message récapitulatif indiquant s'il existe ou non des équipements instrumentés analysés qui ne sont pas protégés en écriture ; et causer une restitution du message récapitulatif à un utilisateur par un périphérique de sortie. .

Le procédé peut également comprendre les caractéristiques optionnelles suivantes, prises seules ou en combinaison à chaque fois que cela est possible techniquement.

De préférence, le procédé comprend en outre compter, à partir de chaque information extraite, un nombre d'équipements instrumentés ayant été analysés qui ne sont pas protégés en écriture, le message récapitulatif indiquant le nombre.

De préférence, le message récapitulatif indique un nombre total d'équipements instrumentés ayant été analysés.

De préférence, plusieurs systèmes instrumentés connectées à une même boucle de courant sont analysés.

De préférence, plusieurs systèmes instrumentés connectés à des boucles de courant distinctes sont analysés.

De préférence, le périphérique de sortie est un écran d'affichage.

De préférence, le procédé comprend afficher, sur l'écran d'affichage, une barre de progression qui avance à chaque fois qu'une analyse d'un système instrumenté est réalisée.

De préférence, le procédé comprend en outre : générer un tableau indiquant pour chaque système instrumenté ayant été analysé un identifiant ou un nom du système instrumenté et une valeur représentative de l'information extraite de la trame émise par le système instrumenté ; et causer l'affichage du tableau sur l'écran d'affichage.

Un deuxième objet de la présente divulgation est un produit programme d'ordinateur comprenant des instructions de code de programme pour l'exécution des étapes du procédé ci-dessus, lorsque ce programme est exécuté par un ordinateur.

Encore un autre objet de la présente divulgation est un dispositif comprenant : une interface de communication pour communiquer avec au moins un système instrumenté via une boucle de courant ; un périphérique de sortie ; et un module de traitement configuré pour exécuter le programme d'ordinateur constituant le deuxième objet précité.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un système selon un mode de réalisation de l'invention.
La figure 2 illustre de façon schématique un dispositif selon un mode de réalisation de l'invention, ce dispositif faisant partie du système représenté en figure 1.
La figure 3 est un organigramme d'étapes d'un procédé selon un mode de réalisation, mis en œuvre par le dispositif précité.
La figure 4 est un organigramme de sous-étapes d'une étape de scan du procédé de la figure 3.

Sur l'ensemble des figures, les éléments similaires portent des références identiques.

### DESCRIPTION DETAILLEE DE L'INVENTION

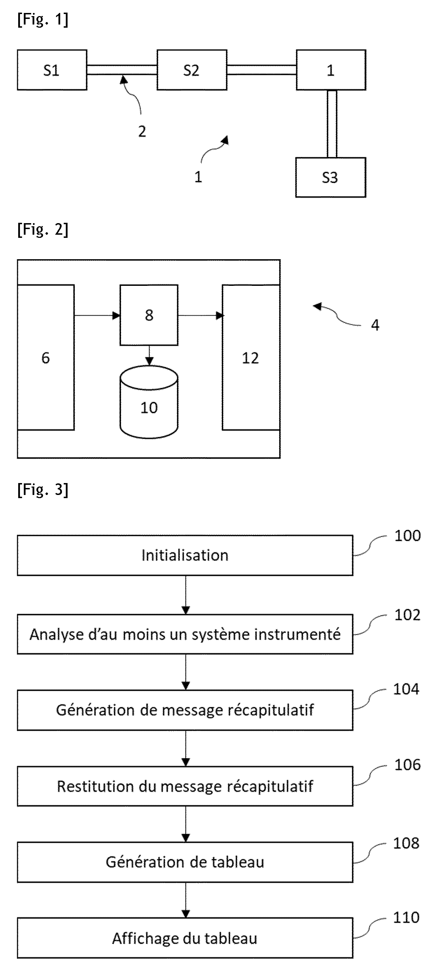

En référence à la **figure 1****,** un système comprend un dispositif 1 et au moins un système instrumenté S1, S2, S3 connecté au dispositif via au moins une boucle de courant. Les équipements communiquent entre eux à l'aide de signaux conformes au protocole HART.

La figure 1 représente un exemple dans lequel le dispositif 1 est connecté à une boucle de courant 2, deux équipements instrumentés S1, S2 étant également connecté à cette boucle ; le dispositif est en outre connecté à un autre système instrumenté S3 via une autre boucle de courant.

Le dispositif 1 est un équipement configuré pour générer des commandes conformes au protocole HART et les injecter dans la boucle de courant 2, ces commandes étant destinées à être traitées par un équipement instrumenté.

Chaque équipement instrumenté, agissant comme un esclave, est configuré pour détecter sur la boucle de courant 2 des commandes qui lui sont destinées, et pour les traiter. Par exemple, un équipement esclave peut être un capteur, un positionneur, un régulateur, etc. Les équipements esclaves peuvent typiquement être utilisés dans l'une des applications suivantes : pétrochimie, production thermique, contrôle de réseaux d'eau et/ou de chaleur, écluses, systèmes de réseau fluvial, etc.

Chaque système instrumenté dispose d'une adresse sur la boucle de courant à laquelle il est connecté.

Il existe différents types de commandes HART. Par exemple, certaines commandes sont des commandes ayant vocation à agir sur une installation (ouvrir une vanne, modifier une température, changer un paramètre de la configuration, etc.). Ces commandes sont dites « d'écriture » car elles ont pour vocation de réaliser une modification du statut de l'esclave. D'autres commandes sont des commandes de statut, demandant à un esclave destinataire d'émettre une réponse informant le maître émetteur sur son état interne. Ces commandes sont dîtes de « lecture ». D'autres commandes demandant à un esclave de mettre à jour un de ses paramètres internes (nom, mot de passe, etc.).

En référence à la **figure 2****,** le dispositif 1 comprend une interface de communication 6 connectable à une ou plusieurs boucles de courant 2 et une unité de traitement 8.

L'interface de communication 6 est, de manière générale, configurée pour injecter des commandes HART et intercepter des trames de réponse HART qui circulent sur la boucle de courant 2. L'interface de communication peut comprendre un ou plusieurs modem(s) HART, et un isolateur galvanique . L'isolateur galvanique évite tout risque de circulation de courant indésirable entre la boucle de courant 2 et l'unité de traitement 8. Il permet néanmoins la transmission de signaux HART vers et depuis la boucle de courant 2.

L'unité de traitement 8 est configurée pour analyser des commandes interceptées par l'interface de communication.

L'unité de traitement 8 peut être de tout type : processeur, microprocesseur, nano-ordinateur (par exemple de type Raspberry Pi), circuit programmable ou non programmable (ASIC, FPGA, etc.). L'unité de traitement 8 est par exemple configurée pour exécuter un programme d'ordinateur comprenant des instructions de code à cet effet.

Le dispositif 1 comprend par ailleurs une mémoire 10 apte à mémoriser certaines données manipulées ou générées par l'unité de traitement 8.

Le dispositif 1 peut également comprend une interface homme/machine 12, permettant à un utilisateur d'interagir avec le dispositif 4.

L'interface homme/machine 12 comprend une interface de sortie pour notifier des alertes à un utilisateur, par exemple de manière visuelle et/ou sonore. L'interface de sortie est typiquement un écran d'affichage, sur lequel certaines données graphiques peuvent être affichées sur commande de l'unité de traitement.

L'interface homme/machine 12 comprend par ailleurs une interface d'entrée permettant à un utilisateur de commander le fonctionnement du dispositif. L'interface d'entrée comprend par exemple une souris, ou bien un écran tactile. En variante ou en complément, l'interface d'entrée comprend un ou plusieurs boutons associés à différentes actions. Le ou chaque bouton peut être un bouton physique, ou bien être un bouton virtuel affiché sur un écran d'affichage tactile.

En référence à la figure 3, un procédé utilisant le dispositif 1 comprend les étapes suivantes.

Le dispositif 1 est mis sous tension (étape 100), par exemple à l'aide d'un bouton prévu à cet effet.

Dans une étape 102, le module de traitement lance un scan des boucles de courants auxquelles l'interface de communication est connectée 12. Ce scan comprend N analyses individuelles de système instrumenté connecté à une boucle de courant, avec N≥1.

Le résultat de ce scan est l'obtention de N informations associées respectivement aux N systèmes instrumentés ayant été analysés. Chaque information indique si le système instrumenté associé est protégé en écriture, ou s'il n'est pas protégé en écriture.

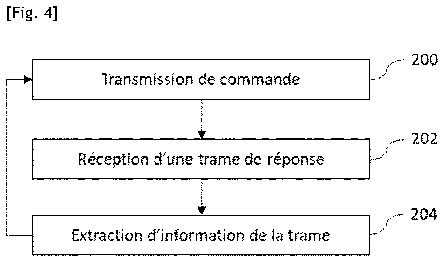

En référence à la figure 4, chaque analyse comprend les étapes suivantes.

Dans une étape 200, le module de traitement 8 demande à l'interface de communication 6 d'émettre sur une boucle de courant une commande visant à obtenir l'information associée au système instrumenté. La commande comprend une adresse de destinataire sur la boucle de courant. Cette commande, conforme au protocole HART, est connue : il s'agit de la commande appelée « Command 15 (Read Primary Variable Output Information) ».

Le système instrumenté se trouvant à l'adresse en question reçoit la commande, et y répond en émettant une trame de réponse destinée au dispositif 1. Le format de cette trame de réponse est également conforme au protocole HART. La trame inclut l'information attendue (indiquant que le système instrumenté est protégé en écriture ou non), mais cette information est noyée parmi d'autres dans la trame, et n'est pas facilement lisible. Cette information est appelée Write Protect Code : elle vaut 1 lorsque le système instrumenté est protégé en écriture, et vaut 0 dans le cas contraire.

Dans une étape 202, l'interface de communication 6 reçoit la trame émise par le système instrumenté.

Dans une étape 204, le module de traitement 8 extrait de la trame l'information pertinente. Cette extraction consiste en particulier à identifier dans la trame la valeur du booléen constituant cette information (protégé en écriture/non protégé en écriture), laquelle se trouve à une position de la trame, cette position étant définie par le protocole HART. Chaque information extraite est mémorisée dans la mémoire 10.

Les étapes 200, 202, 204 qui précèdent sont répétée pour plusieurs adresses de système instrumentées.

Il est à noter que le dispositif 1 peut ne pas connaître les adresses respectives des systèmes instrumentés présentés. Au cours du scan, le dispositif peut tester de manière systématique toute adresse se trouvant dans un intervalle d'adresses prédéfini, c'est-à-dire mettre en œuvre l'étape 200 pour chacune de ces adresses. Ainsi, certaines commandes peuvent être émises à des adresses non occupées par des systèmes instrumentées, et restent sans réponses. Le dispositif 1 est capable de détecter de telles absences de réponse dans un délai prédéfini.

Au cours du scan, le module de traitement cause l'affichage, sur l'écran d'affichage, d'une barre de progression reflétant le niveau d'avancement de ce scan. La barre de progression avance à chaque fois qu'une analyse individuelle est terminée.

Le module de traitement 8 compte le nombre M de systèmes instrumentés ayant été analysés qui ne sont pas protégés en écriture. Pour cela, le module se fonde sur chaque information extraite au cours du scan. Ce comptage peut se faire par incrémentation par un compteur dédié, au cours du scan ou après le scan.

Le module de traitement 8 compte en outre le nombre total N de système instrumentés analysés (c'est-à-dire ceux qui sont effectivement présents). Ce nombre correspond au nombre effectif d'informations reçues puis extraites.

De retour à la figure 3, dans une étape 104, le module de traitement 8 génère un message récapitulatif au moins en partie en langage naturel à partir de chaque information extraite au cours du scan. Le message récapitulatif indique s'il existe ou non des équipements instrumentés analysés qui ne sont pas protégés en écriture.

De préférence le message récapitulatif indique le nombre total d'équipements analysés et/ou le nombre d'équipement ayant été analysés qui ne sont pas protégés en écriture.

Un exemple de message récapitulatif en langage naturel est le suivant :« [M] équipements sur [N] ne sont pas protégés en écriture » (ici, [M] et [N] désigne les valeurs numériques de M et N).

Dans une étape 106, le message récapitulatif est restitué à un utilisateur par un périphérique de sortie du dispositif 1. Le message en en particulier être restitué sous forme visuelle par l'écran d'affichage du dispositif 1 et/ou sous forme sonore par un haut-parleur du dispositif 1. Un tel message est très facile à comprendre par un utilisateur, en particulier un utilisateur néophyte en matière de protocole HART.

Par ailleurs, dans une étape 108, le module de traitement génère un tableau indiquant pour chaque système instrumenté ayant été analysé :
- un identifiant ou un nom du système instrumenté (extrait de la trame discutée précédemment, ou d'une autre trame faisant réponse à une autre commande appropriée définie par le protocole HART) ;
- une valeur représentative de l'information extraite de la trame émise par le système instrumenté. Par exemple, cette valeur est 1 lorsque le système instrumenté est protégé en écriture, et 0 lorsqu'il ne l'est pas ;
- optionnellement, un horodatage indiquant une date d'analyse du système instrumenté.

La figure 3 présente cette étape de génération de tableau 108 comme étant mise en œuvre après le scan, mais peut en variante être réalisée au cours du scan.

Dans une étape 110, le module de traitement 8 cause l'affichage de ce tableau par l'écran d'affichage du dispositif 1. Cette étape est par exemple déclenchée lors d'une action utilisateur, par exemple l'appui sur un bouton physique ou un bouton virtuel se trouvant dans une interface graphique également affichée par l'écran d'affichage. Ce tableau fournit à l'utilisateur des informations plus approfondies que le message récapitulatif, en cas de besoin.

## Revendications

1. Procédé comprenant :
• analyser au moins un système instrumenté (102), l'analyse d'un système instrumenté comprenant :
• causer une transmission (200) au système instrumenté d'une commande selon le protocole HART via une boucle de courant à laquelle le système instrumenté est connecté,
• recevoir (202) une trame selon le protocole HART transmise par l'équipement instrumenté en réponse à la commande, via la boucle de courant,
• extraire (204) de la trame une information indiquant si l'équipement instrumenté est protégé en écriture,
• générer (104) un message récapitulatif au moins en partie en langage naturel à partir de chaque information extraite, le message récapitulatif indiquant s'il existe ou non des équipements instrumentés analysés qui ne sont pas protégés en écriture,
• causer une restitution (106) du message récapitulatif à un utilisateur par un périphérique de sortie.

2. Procédé selon la revendication précédente, comprenant en outre compter, à partir de chaque information extraite, un nombre d'équipements instrumentés ayant été analysés qui ne sont pas protégés en écriture, le message récapitulatif indiquant le nombre.

3. Procédé selon l'une quelconque des revendications précédentes, dans lequel le message récapitulatif indique un nombre total d'équipements instrumentés ayant été analysés.

4. Procédé selon l'une quelconque des revendications précédentes, dans lequel plusieurs systèmes instrumentés connectées à une même boucle de courant sont analysés.

5. Procédé selon l'une quelconque des revendications précédentes, dans lequel plusieurs systèmes instrumentés connectés à des boucles de courant distinctes sont analysés.

6. Procédé selon l'une quelconque des revendications précédentes, dans lequel le périphérique de sortie est un écran d'affichage.

7. Procédé selon la revendication précédente, comprenant afficher, sur l'écran d'affichage, une barre de progression qui avance à chaque fois qu'une analyse d'un système instrumenté est réalisée.

8. Procédé selon l'une quelconque des revendications 6 et 7, comprenant en outre
• générer (108) un tableau indiquant pour chaque système instrumenté ayant été analysé :
• un identifiant ou un nom du système instrumenté,
• une valeur représentative de l'information extraite de la trame émise par le système instrumenté,
• causer (110) l'affichage du tableau sur l'écran d'affichage.

9. Produit programme d'ordinateur comprenant des instructions de code de programme pour l'exécution des étapes du procédé selon l'une des revendications précédentes, lorsque ce programme est exécuté par un ordinateur.

10. Dispositif (1) comprenant :
• une interface de communication (6) pour communiquer avec au moins un système instrumenté via une boucle de courant,
• un périphérique de sortie (12),
• un module de traitement (8) configuré pour exécuter le programme d'ordinateur selon la revendication précédente.
